# EUROPEAN PATENT APPLICATION

(11) **EP 1 106 439 A2**
(43) Date of publication of application: **13.06.2001**
(21) Application number: 00310952.7
(22) Date of filing: 08.12.2000
(51) Int. Cl.: B60R 11/02, H04R 5/02

(54) **Automobile pillar electroacoustical transducing**

(30) Priority: 09.12.1999 US 458248
(71) Applicant: BOSE CORPORATION, Framingham, Massachusetts 01701-9168 (US)
(72) Inventor: Nichols, George, Framingham, Massachusetts 01701-9168 (US); Kawakami, Seiji, Framingham, Massachusetts 01701-9168 (US); West, James A., Framingham, Massachusetts 01701-9168 (US)
(74) Representative: Brunner, Michael John

(57) **Abstract**

An acoustic assembly including an electroacoustical transducer and an acoustic element, separate from the acoustical transducer, designed and constructed to be an element of a structural pillar of an automobile.

## Description

The invention relates to loudspeaker systems for automobiles and more particularly to the mounting of electroacoustical transducers and other acoustic elements in the structural pillars of automobiles.

It is an important object of the invention to provide an improved acoustical system for an automobile.

According to the invention, an acoustic assembly includes an electroacoustical transducer and an acoustic element, separate from the electroacoustical transducer, designed and constructed to improve the acoustic performance of the electroacoustical transducer. The acoustic assembly is designed and constructed to be an element of a vehicle pillar.

In another aspect of the invention, a structural automobile pillar contains an acoustic assembly. The acoustic assembly including an acoustical driver and an acoustic element.

In another aspect of the invention, a trim element for covering a vehicle pillar forms an acoustic assembly.

In still another aspect of the invention, an automobile pillar includes a plurality of apertures. Each of the apertures includes a sound source.

Other features, objects, and advantages will become apparent from the following detailed description, which refers to the following drawing in which:
FIG. 1 is a cutaway drawing of an automobile structure;
FIG. 2 is a side plan view of an automobile trim element in accordance with the invention;
FIGS. 3A and 3B are cross sectional views of the trim element of FIG. 2 ;
FIGS. 4A and 4B are cross sectional views of a second embodiment of the invention;
FIG. 5 is a cross sectional view of a third embodiment of the invention;
FIG. 6 is a partial cross sectional view of a fourth embodiment of the invention; and
FIGS . 7A, 7B, and 7C are partial cross sectional views of a fifth embodiment of the invention.

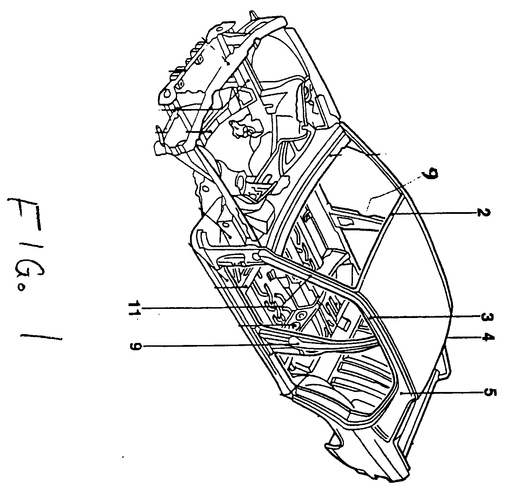

With reference now to the drawings and more particularly to FIG. 1, there is shown a cutaway figure of an automobile for the purposes of identifying standard automotive structural terms used herein. FIG. 1 is based on the diagram on page 684 of the "Automotive Handbook" fourth edition, ISBN 0-8376-0333-1, published by Robert Bosch GmbH of Stuttgart, Germany, distributed in the USA by Robert Bentley, Publishers 1033 Massachusetts Avenue, Cambridge, MA 02138. Structural elements of the automobile include three pairs of predominantly vertical supports, or "pillars" connecting structural elements with roof frame elements and supporting the roof frame elements. The pillars include the A-pillars 11, which connect to and support the ends of front roof frame 2 and the side roof frame 3; the B-pillars 9, which connect to and support side roof frames 3 between the two ends of side roof frames 3; and the C-pillars 5 (only one shown in this view) which connect to and support the ends of rear roof frame 4 and side roof frames 3. A-pillars 11, B-pillars 9, and C-pillars 5 typically include a structural element and interior and exterior trim elements (that is, inside and outside the passenger compartment) that cover or enclose the structural element.

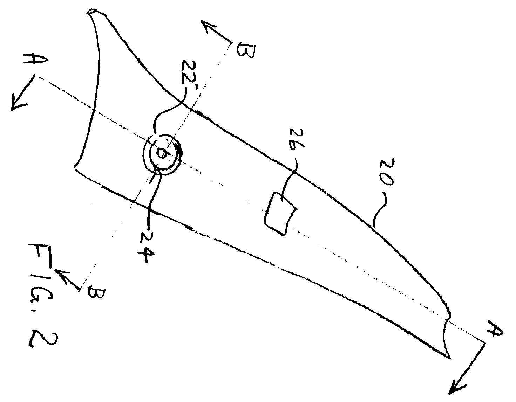

Referring now to FIG. 2, there is shown an interior trim element 20 for an A-pillar incorporating an acoustic assembly in accordance with the invention. Trim element 20 includes two openings or apertures 22, 26. The acoustic assembly of FIG. 2 includes an electroacoustical transducer 24 mounted in a first aperture 22 and an acoustic element as will be described below which radiates sound waves from second aperture 26. Typically, apertures 22 and 26 are covered by a grillwork of some sort of material that is acoustically transparent, or which has, at most, minimal acoustic resistance. The grillwork protects the electroacoustical transducer 24 and prevents debris from entering apertures 22 and 26. For clarity, the grillwork is omitted from the figures.

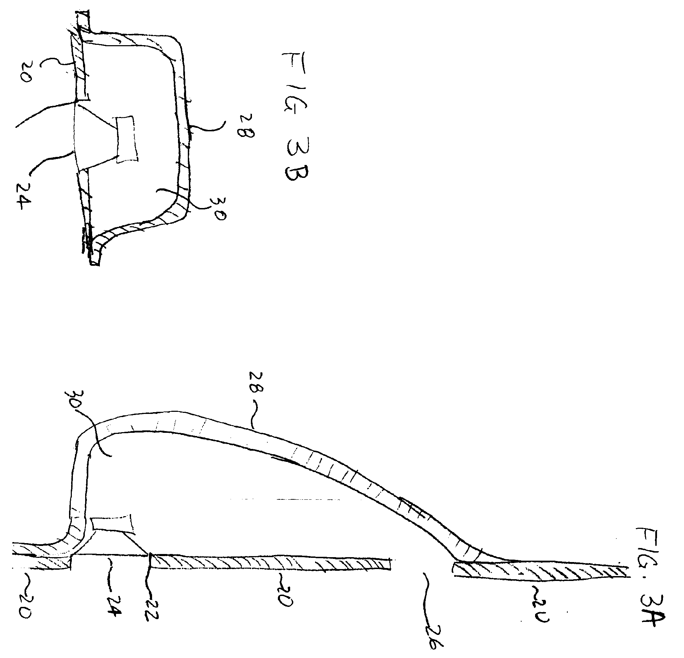

Referring to FIGS. 3A and 3B, there are shown cross-sectional views of trim element, taken along lines A - A and B - B, respectively. In FIGS. 3A and 3B, trim back support 28 is attached to trim element 20 to form an acoustic element such as an acoustic enclosure 30. Typically, back support 28 is attached to trim element 20 by an adhesive; however other forms of attachment can be used, for example mechanical fasteners such as snap fasteners. Adhesives are particularly desirable, since they can be applied in such a manner so as to make acoustic enclosure 30 substantially airtight, except for apertures 22, 26. By varying the dimensions and shape of trim element 20 and back support 28 to control the dimensions and shape of acoustic enclosure 30, by adjusting or eliminating apertures 22 and 26, or by adjusting the characteristics and placement of electroacoustical transducer 24, a variety of different forms of acoustic elements can be formed. The cross section shown in FIG 3B may be uniform at positions between electroacoustical transducer 24 and aperture 26, or may be tapered or stepped as described in U.S. Patent application 09/146,662.

In one embodiment, electroacoustical transducer 24 is a 2 inch (5.08 cm) driver commercially available from NMB Technologies of Chatsworth, CA. Back support 28 and trim element 20 are dimensioned and shaped so that acoustic enclosure 30 is a two ended waveguide with a tapered cross section according to the principles of Patent Application 09/146,662, with an effective cross section of about 12.5 cm² at the electroacoustical transducer end and about 6.25 cm² at the open end, and a physical length of about 29.0 cm. The assembly including electroacoustical transducer 24 and acoustic enclosure 30 has a tuning frequency of approximately 200 Hz.

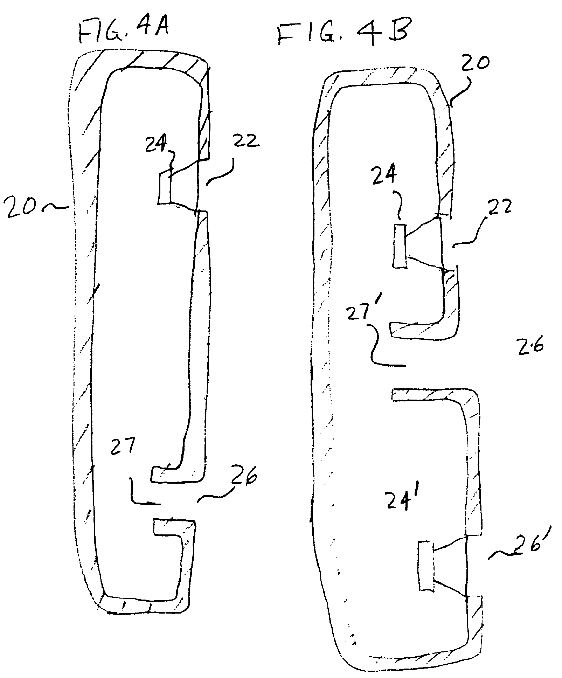

Referring now to FIGS. 4A and 4B, there are shown other embodiments of the invention. In FIG. 4A, aperture 26 is dimensioned to act as a ported volume for electroacoustical transducer 24 so that the acoustic assembly of FIG. 4A includes an electroacoustical transducer and an acoustic element, the acoustic element being a ported volume. In FIG. 4B, there is a third aperture 26' in which is mounted a second electroacoustical transducer 24'. In one embodiment, second aperture 26 is positioned approximately equidistantly from first and third apertures 22 and 26', respectively. Ported enclosures such as shown in FIGS. 4A and 4B may also have internal baffles and ports, such as described in U.S. Pats. 4,549,631 and 5,025,885. The types of acoustic elements that may be used with this embodiment of the invention include acoustic elements such as waveguides or ported enclosures that have at least two sound sources, such as a port, a waveguide end, or a transducer mounted in an aperture. The dimensions and other parameters of the acoustic element are selected to improve the acoustic performance of electroacoustical transducer 24 (and other electroacoustical transducers, such as 24', if present), such as by improving the frequency response of electroacoustical transducer 24, expanding the effective frequency range of electroacoustical transducer 24, or improving the spatial effect of electroacoustical transducer 24.

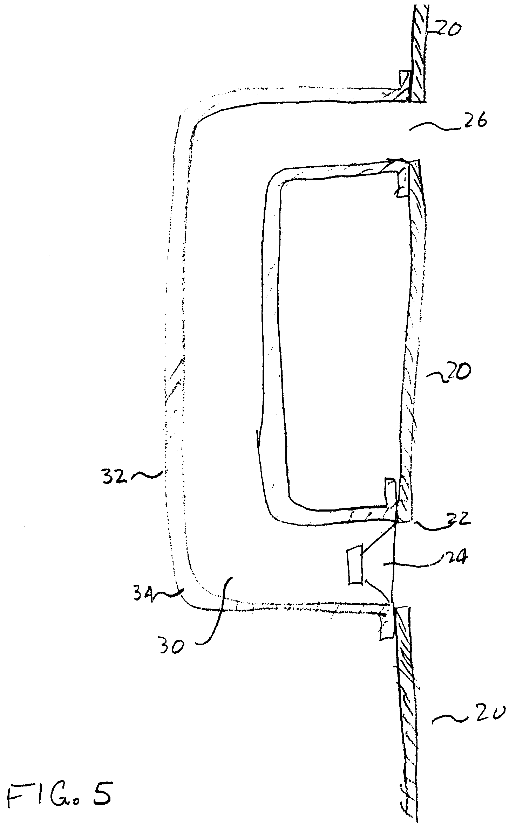

Referring to FIG. 5, there is shown another embodiment of the invention. An acoustic assembly 32 includes electroacoustical transducer 24 and two ended waveguide 34 in which both ends of the waveguide radiate sound waves. Two ended waveguide 34 may have an electroacoustical transducer 24 mounted in one end, mounted at some point in the waveguide, or mounted in a wall of the waveguide. Acoustic assembly 32 is constructed and arranged so that it can be pre-assembled and mounted to trim element 20 so that the waveguide openings are aligned with apertures 22 and 26. As with the embodiment of FIG. 3, acoustic assembly 32 could include any one of a number of acoustic elements, such as a closed volume, a ported volume, a single ended waveguide, in which sound is radiated from only one end of the waveguide, or a two-ended waveguide as shown.

An acoustic assembly in accordance with this aspect of the invention is advantageous because the acoustic element supplementing the transducer extends the effective frequency range of a relatively small electroacoustical transducer, and makes effective use of the inside of the pillar trim, which is typically unused by acoustic systems. The presence of a second source in addition to the electroacoustical transducer, such as a port or waveguide end, lessens the likelihood of a listener localizing on the electroacoustical transducer. This is a particular advantage in an automobile passenger compartment.

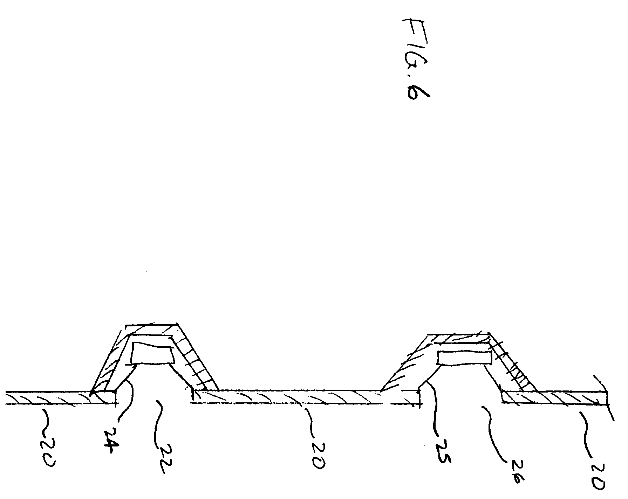

Referring to FIG. 6, there is shown another embodiment of the invention. Trim element 20 has two apertures 22, 26, each having an electroacoustical transducer 24, 25 respectively, mounted in the aperture. Electroacoustical transducers 24, 25 may have a sealed back, as shown, or may have an acoustic enclosure such as an unported acoustic volume, dimensioned and constructed to improve the acoustic output of electroacoustical transducer 24. An embodiment according to FIG. 6 is advantageous when the electroacoustical transducer has adequate frequency range for the application but it is desirable to have more than one sound source, to prevent the listener from localizing on a single electroacoustical transducer.

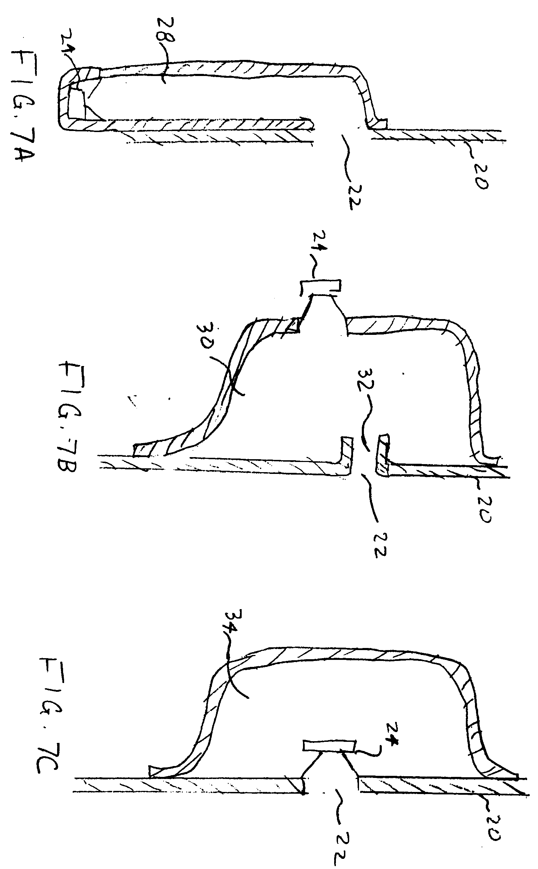

Referring now to FIGS. 7A - 7C, there is shown another embodiment of the invention. Trim element 20 of an automobile pillar, such as the A-pillar, has an aperture 22. Aperture 22 forms the opening of a single sound source acoustic assembly including an electroacoustical transducer 24 and an acoustic element such as a single ended waveguide 28 of FIG. 7A, an enclosure 30 with a port 32 of FIG. 7B, or a sealed enclosure 34 of FIG. 7C.

Other embodiments may include combinations of the embodiments of FIGS. 3, 4A, 4B, 5, 6, and 7B - 7C.

## Claims

1. An acoustic assembly comprising
an electroacoustical transducer; and
an acoustic element, separate from said electroacoustical transducer, designed and constructed to improve the acoustic performance of said electroacoustical transducer;
said acoustic assembly designed and constructed to be an element of a vehicle pillar.

2. A structural automobile pillar containing an acoustic assembly, said acoustic assembly including an acoustical driver and an acoustic element.

3. A trim element for covering a vehicle pillar, said trim element forming an acoustic assembly.

4. An acoustic assembly in accordance with claim 1, an automobile pillar in accordance with claim 2, or a trim element in accordance with claim 3, wherein said pillar is an A-pillar.

5. An acoustic assembly in accordance with claim 1, an automobile pillar in accordance with claim 4 or a trim element in accordance with claim 3, wherein said acoustic element is a waveguide.

6. An acoustic assembly, an automobile pillar or trim element in accordance with claim 5, wherein said waveguide is a two-ended waveguide.

7. An acoustic assembly, an automobile pillar or trim element in accordance with claim 5, wherein said waveguide is a single-ended waveguide.

8. An acoustic assembly in accordance with claim 1, an automobile pillar in accordance with claim 4, or a trim element in accordance with claim 3, wherein said acoustic assembly is an acoustic volume.

9. An acoustic assembly in accordance with claim 8, wherein said acoustic volume is ported.

10. An acoustic assembly in accordance with claim 8, wherein said acoustic volume is sealed.

11. An acoustic assembly in accordance with claim 9 or claim 10, including a first and a second electroacoustical transducer.

12. An automobile pillar comprising a plurality of sound sources.

13. An automobile pillar in accordance with claim 12, wherein said plurality of sound sources comprises a plurality of electroacoustical transducers.

14. An automobile pillar in accordance with claim 12 , wherein a first of said sound sources comprises a first electroacoustical transducer and a second of said sound sources comprises a port opening.

15. An automobile pillar in accordance with claim 14, including a third sound source comprising a second electroacoustical transducer, and wherein said first and third sound sources are positioned equidistantly from said second sound source.

16. An automobile pillar in accordance with claim 13, wherein said plurality of sound sources comprises an electroacoustical transducer and a waveguide opening.
